Europäisches Patentamt

**European Patent Office**

**Office européen des brevets**

(11) Numéro de publication: **0 262 064 B1**

(12) **FASCICULE DE BREVET EUROPEEN**

(45) Date de publication de fascicule du brevet: **03.06.92** (51) Int. Cl.⁵: **G07B 13/08**, G05B 19/04

(21) Numéro de dépôt: **87430030.4**

(22) Date de dépôt: **21.08.87**

(54) **Procédés pour programmer un taximètre électronique et taximètres électroniques correspondants.**

(30) Priorité: **26.09.86 FR 8613566**

(43) Date de publication de la demande:
**30.03.88 Bulletin 88/13**

(45) Mention de la délivrance du brevet:
**03.06.92 Bulletin 92/23**

(84) Etats contractants désignés:
**BE DE ES GB IT**

(56) Documents cités:
EP-A- 0 065 662      EP-A- 0 100 140
EP-A- 0 131 967      DE-A- 3 145 080
DE-A- 3 311 805      FR-A- 2 335 892
GB-A- 1 519 721      GB-A- 1 586 557

(73) Titulaire: **Ricard, Claude**
**Villa Sainte Madeleine 52, Cours Gambetta**
**F-13100 Aix-en-Provence(FR)**

(72) Inventeur: **Ricard, Claude**
**Villa Sainte Madeleine 52, Cours Gambetta**
**F-13100 Aix-en-Provence(FR)**

(74) Mandataire: **Moretti, René et al**
**c/o Cabinet BEAU DE LOMENIE**
**"Prado-Mermoz" 232, Avenue du Prado**
**F-13008 Marseille(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

Procédés pour programmer un taximètre électronique et taximètres électroniques correspondants.

La présente invention a pour objet des procédés pour inscrire un programme dans un taximètre électronique et des taximètres électroniques adaptés à ces procédés.

Les taximètres électroniques comportent un microprocesseur composé d'une plaquette en circuit intégré qui regroupe notamment une unité central de calcul, une mémoire centrale et un circuit d'interface entrées-sorties sur lequel sont connectés notamment une horloge, un capteur de distance qui émet des impulsions correspondant chacune à une distance déterminée parcourue par le taxi et un dispositif d'affichage.

Les taximètres électroniques connus comportent, en outre, une mémoire morte (ROM, PROM ou EPROM), en circuit intégré, dans laquelle est inscrit un programme de fonctionnement qui commande automatiquement les suites d'opérations logiques ou arithmétiques effectuées par l'unité centrale pour calculer le prix de la course et qui ne peut pas être modifié sans intervention dans le taximètre.

On appelle programme de fonctionnement une suite d'instructions dite code opérations qui sont exécutées automatiquement par le microprocesseur.

A ce jour, le programme de fonctionnement est toujours inscrit dans une mémoire morte qui présente l'avantage d'être une mémoire permanente, qui ne peut pas s'effacer accidentellement, de sorte que le taximètre ne risque pas de perdre son programme, ce qui le rendrait inerte (voir par example GB-A-1 586 557).

Cette solution présente plusieurs inconvénients.

Dans le cas de mémoires mortes ROM, qui sont les plus économiques et qui sont le plus souvent intégrées dans la même plaquette que le microprocesseur, une fois que le programme de fonctionnement a été élaboré, l'inscription de ce programme dans la mémoire morte nécessite l'étude et la réalisation d'un masque permettant de confectionner le circuit intégré par des opértions bien connues de photogravure et de dépôt de substances dopantes suivant un dessin complexe.

Les fabricants de masques demandent des délais de l'ordre de six mois pour étudier et réaliser un masque de mémoire morte en circuit intégré contenant un programme. Pendant ce temps, le fabricant de taximètres ne peut pas livrer des appareils à ses clients.

Si, de plus, par suite de l'évolution des techniques ou des règlements locaux il désire modifier le programme de fonctionnnement, il doit commander de nouvelles mémoires mortes contenant un nouveau programme et attendre à nouveau six mois pour les recevoir.

Un premier objectif de la présente invention est de procurer des moyens permettant à un fabricant de taximètres de livrer des appareils à ses clients sans avoir à attendre de disposer de mémoires mortes de type ROM contenant le programme de fonctionnement du taximètre.

Un autre problème que rencontrent les fabricants de taximètres réside dans le fait que les règlements et les habitudes d'utilisation des taximètres varient d'un pays à un autre et même d'une ville à l'autre à l'intérieur d'un même pays.

Par exemple certains pays comme la GRANDE BRETAGNE exigent que le montant des suppléments soit affiché tandis qu'en FRANCE, les suppléments pour bagages transportés sont additionnés du montant de la course par le chauffeur de taxi. Certains pays exigent un changement automatique de tarif au delà d'une distance déterminée tandis que d'autres pays demandent l'application d'un prix unitaire de distance uniforme.

A ce jour, le programme enregistré dans les taximètres doit donc être élaboré en fonction du pays ou de la ville dans lequel circulent les taxis équipés de ces taximètres et les fabricants de taximètres doivent donc disposer d'un stock de mémoires mortes programmées différemment pour faire face aux commandes provenant de différents pays.

Un autre objectif de la p résente invention est de procurer aux fabricants de taximètres des moyens leur permettant de fabriquer en série des taximètres identiques, quel que soit leur destination, et d'introduire électriquement au dernier moment dans les taximètres, un programme adapté au pays où ils doivent être utilisés.

Un autre objectif est de procurer aux fabricants ou aux utilisateurs de taximètres des moyens leur permettant de modifier le programme de fonctionnement de taximètres qui sont en service pour adapter celui-ci à des modifications de la règlementation sans avoir à intervenir manuellement à l'intérieur du boîtier des taximètres.

Les objectifs de l'invention sont atteints au moyen de taximètres électroniques qui comportent :

- une mémoire électriquement effaçable et reprogrammable;
- une prise entrée-sortie qui permet de connecter ledit taximètre sur une unité de calcul externe;
- et une mémoire morte dans laquelle est inscrit un programme chargeur qui commande automatiquement les opérations de transfert dans ladite mémoire électriquement effaçable et reprogrammable dudit programme de fonctionnement du taximètre depuis ladite unité de calcul externe lorsque celle-ci est connectée sur ladite prise entrée-sortie du taximètre.

Un procédé selon l'invention pour inscrire un programme de fonctionnement dans des taximètres électroniques comporte les opérations suivantes :

- on enregistre ledit programme dans une unité de calcul externe;
- on connecte temporairement les taximètres un par un sur ladite unité externe;
- et le microprocesseur du taximètre transfère automatiquement dans la mémoire électriquement effaçable et reprogrammable du taximètre, ledit programme, ce qui permet d'inscrire initialement un programme dans le taximètre et/ou de modifier ultérieurement le programme de fonctionnement d'un taximètre sans aucune intervention manuelle à l'intérieur du boîtier du taximètre.

Un procédé selon l'invention comporte une opération suivant laquelle on inscrit dans une mémoire morte du taximètre, un programme chargeur qui commande automatiquement le microprocesseur du taximètre pour permettre à celui-ci de transférer électriquement dans la mémoire électriquement effaçable et reprogrammable du taximètre le programme contenu dans l'unité de calcul externe sur laquelle le taximètre est connecté temporairement.

Un procédé selon l'invention permet à un fabricant de taximètre d'introduire au dernier moment dans les taximètres un programme de fonctionnement adapté à des spécifications locales.

Selon ce procédé, un fabricant de taximètres fabrique en série des taximètres identiques comportant une mémoire morte dans laquelle sont inscrites une bibliothèque de sous-programmes et une première partie du programme de fonctionnement comportant notamment un programme chargeur et, lorsqu'il connaît les spécifications locales de fonctionnement des taximètres, il adapte ceux-ci auxdites spécifications en introduisant dans une unité de calcul externe, une deuxième partie du programme de fonctionnement qui appelle certains desdits sous-programmes, il connecte temporairement lesdits taximètres un par un sur ladite unité de calcul externe et le microprocesseur de chaque taximètre, commandé par ledit programme chargeur, introduit électriquement ladite deuxième partie de programme dans ladite mémoire électriquement effaçable et reprogrammable.

Un procédé selon l'invention permet, en outre, à un fabricant de taximètres de livrer des taximètres électroniques pendant la période où il ne dispose pas de mémoire morte de type ROM contenant le programme de fonctionnement.

Pour arriver à ce résultat, le fabricant enregistre dans des mémoires mortes programmables (PROM) un programme chargeur permettant de commander automatiquement les opérations de chargement de données et d'un programme dans la mémoire électriquement effaçable et reprogrammable des taximètres, et il connecte une desdites mémoires (P ROM) sur chaque taximètre, il enregistre dans la mémoire d'une unité de calcul externe des données de tarification et un programme de fonctionnement, il connecte temporairement chaque taximètre sur ladite unité de calcul externe et le microprocesseur dudit taximètre, commandé par ledit programme chargeur, transfère automatiquement lesdites données et ledit programme de fonctionnement dans la mémoire électriquement effaçable et reprogrammable du taximètre.

L'invention a pour résultat de nouveaux taximètres électroniques comportant une mémoire électriquement effaçable et reprogrammable dans laquelle le microprocesseur du taximètre inscrit lui-même une partie au moins du programme de fonctionnement du taximètre, c'est-à-dire du programme qui commande les suites d'opérations effectuées par le microprocesseur du taximètre.

On distingue deux grandes catégories de mémoires électroniques.

Une première catégorie est celle des mémoires mortes, c'est-à-dire des mémoires qui contiennent une information non volatile.

Dans cette catégorie rentrent les mémoires ROM (Read ONLY MEMORY) qui sont programmées lors de la fabrication et qui ne peuvent plus être effacées. La fabrication de mémoires ROM en circuits intégrés est une opération longue et coûteuse qui nécessite la conception et la fabrication de masques complexes de photogravure. De ce fait, les délais courants de fabrication d'une mémoire ROM sont de l'ordre de trois à six mois.

Les taximètres existant à ce jour comportent généralement un programme ou logiciel enregistré dans une mémoire ROM.

Le programme est un élément fondamental indispensable au fonctionnement du taximètre et l'inscription de celui-ci dans une mémoire ROM garantit qu'il ne risque pas d'être effacé.

On connaît également des mémoires mortes programmables (PROM) qui sont livrées vierges, qui peuvent être programmées par le fabricant d'appareils et qui ne peuvent plus être effacées une fois programmées.

Il existe des mémoires mortes effaçables et reprogrammables (EPROM) qui sont livrées vierges, qui peuvent être programmées par le fabricant d'appareils et qui peuvent être effacées par un traitement aux ultraviolets, ce qui exige de les extraire de l'appareil.

La deuxième catégorie de mémoires est celle des mémoires vives qui contiennent une information volatile et qui sont électriquement effaçables et reprogrammables.

Les plus connues parmi les mémoires vives sont les mémoires dites RAM (Random Access Memory).

Les données inscrites dans une mémoire vive disparaissent dès que celle-ci n'est plus alimentée électriquement et c'est la raison principale pour laquelle, à ce jour, les programmes ne sont pas enregistrés dans les mémoires vives.

Toutefois, on peut pallier cet inconvénient en équipant les mémoires vives d'une petite batterie d'accumulateurs ou d'une pile qui maintient l'alimentation en cas de coupure du courant électrique alimentant l'appareil électronique.

On connaît des taximètres électroniques comportant une mémoire vive qui contient les prix unitaires à partir desquels l'unité de calcul calcule les prix des courses, et cette mémoire vive comporte une alimentation électrique de secours.Cette solution présente l'avantage que les prix unitaires peuvent être modifiés à partir d'une unité externe connectée sur le taximètre.

Mais à ce jour, le programme de fonctionnement des taximètres électroniques a toujours été inscrit dans une mémoire morte afin d'éviter tout risque d'effacement accidentel de ce programme.

Récemment sont apparues de nouvelles mémoires intermédiaires dites EEPROM qui sont des mémoires électriquement effaçables et reprogrammables et qui peuvent supporter un nombre de cycles d'effacement et de reprogrammation limités.

Les mémoires EEPROM ont en commun avec les mémoires vives la propriété de pouvoir être effacées électriquement, sans avoir à inter venir manuellement sur la mémoire pour la démonter et pour l'extraire de l'appareil.

Dans la suite de l'exposé, nous emploierons l'expression mémoires électriquement effaçables et reprogrammables pour désigner des mémoires vives comportant une alimentation de secours qui les rend permanentes ou des mémoires EEPROM.

La description suivante se réfère aux dessins annexés qui représentent, sans aucun caractère limitatif, des exemples de réalisation de taximètres selon l'invention.

La figure 1 est une représentation schématique d'un premier mode de réalisation d'un taximètre électronique selon l'invention connecté temporairement sur un mini-ordinateur externe.

La figure 2 est une représentation schématique d'un deuxième mode de réalisation d'un taximètre électronique selon l'invention connecté temporairement sur un mini-ordinateur externe.

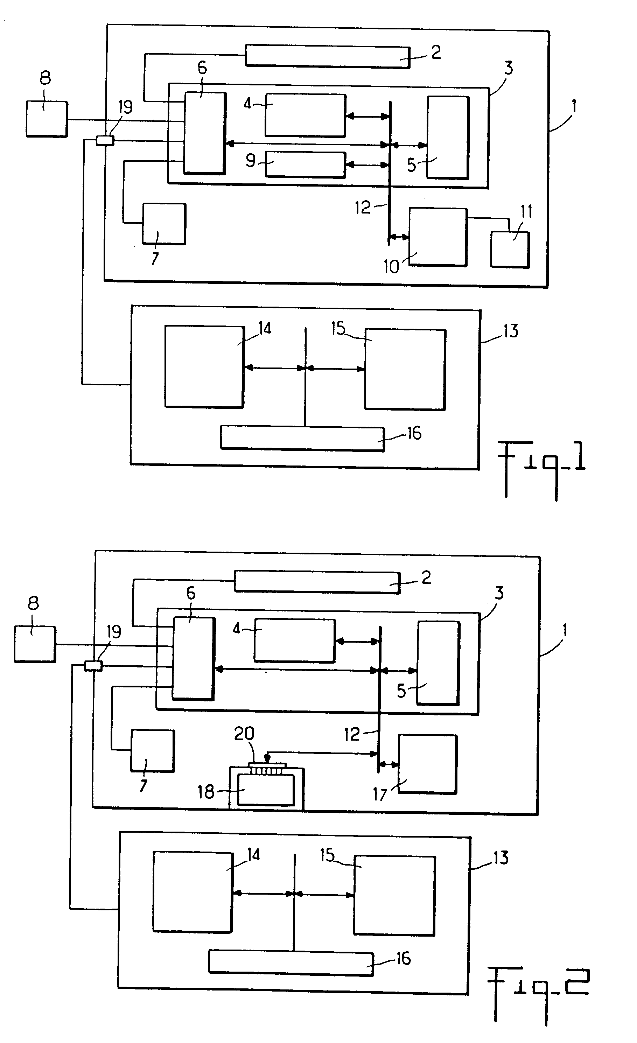

La figure 1 représente schématiquement le boîtier 1 d'un taximètre électronique qui contient un afficheur lumineux 2, qui est un afficheur à diodes électroluminescentes ou à cristaux liquides sur lequel on affiche successivement le prix des courses en taxi et des données de gestion.

Le boîtier 1 contient une plaquette 3 de circuit intégré appelée microprocesseur qui comporte une unité de calcul centrale 4, une mémoire centrale 5 qui est une mémoire vive et une unité d'interface entrée-sortie 6.

Le boîtier du taximètre contient une horloge électronique 7 qui est connectée sur l'interface 6 et qui délivre des impulsions à fréquence constante qui cadencent le fonctionnement du microprocesseur et qui servent à mesurer le temps d'occupation du taxi. Le taxi comporte un capteur de distance 8 qui délivre des impulsions électriques correspondant chacune à une distance déterminée parcourue par le taxi, de sorte que la fréquence des impulsions est proportionnelle à la vitesse de déplacement du taxi. Le capteur de distance ou de parcours 8 est connecté sur le circuit d'interface 6. Le repère 9 représente une mémoire morte (ROM) qui fait partie avantageusement du circuit intégré 3. Cette mémoire morte contient habituellement le programme de fonctionnement c'est-à-dire les instructions ou code-opérations qui déterminent les suites d'opérations qui doivent être effectuées automatiquement par l'unité centrale 4 pour calculer le prix d'une course, pour afficher celui-ci ainsi que d'autres opérations comme par exemple l'affichage de données de gestion.

Le repère 10 représente une mémoire électriquement effaçable et reprogrammable par exemple une mémoire vive (RAM) comportant une alimentation de secours constituée par une petite batterie d'accumulateurs 11. La mémoire 10 peut également être une mémoire de type EEPROM.

Le repère 12 représente le "bus" du taximètre, c'est-à-dire les lignes qui permettent d'interconnecter électriquement et temporairement l'unité centrale 4, la mémoire centrale 5, la mémoire morte 9, la mémoire vive 10 et l'interface entrées-sorties 6.

Le repère 13 désigne une unité externe qui est par exemple un mini-ordinateur portatif comportant, notamment, une unité centrale de calcul 14 et une mémoire vive 15 et des moyens, par exemple un clavier 16, pour entrer des informations dans la mémoire vive 15.

Chaque taximètre comporte une prise entrée-sortie 19 sur laquelle on peut brancher temporairement l'unité externe 13.

On connaît à ce jour des taximètres comportant une mémoire vive 10, qui est associée à une alimentation de secours 11, et dans laquelle on enregistre des prix unitaires à partir desquels le microprocesseur calcule le prix d'une course.

Une valise de programmation contenant un mini-ordinateur peut être connectée sur ces taximètres pour effacer électriquement le contenu de la mémoire vive 10 et pour inscrire dans celle-ci de nouveaux prix unitaires lorsque ceux-ci viennent à changer.

Dans ce cas, la mémoire morte 9 contient un programme qui comm ande automatiqmeent un dialogue entre l'unité centrale 4 et l'unité centrale 14 permettant de transférer dans la mémoire 10 les informations de tarif contenues dans la mémoire 15.

Une difficulté pour un fabricant de taximètres provient du fait que les règlements concernant le fonctionnement de ces appareils et notamment les règles de calcul et d'affichage des prix varient d'un pays à l'autre et même d'une ville à l'autre à l'intérieur de certains pays et le programme de fonctionnement doit être conçu en conséquence.

Comme le programme est inscrit dès l'origine dans une mémoire morte, cela conduit le fabricant à concevoir des programmes spécifiques de chaque lieu d'utilisation et à faire fabriquer plusieurs séries de mémoires mortes, chaque série correspondant à un lieu d'utilisation ou à concevoir des programmables paramétrables.

Comme les délais de fabrication des mémoires mortes sont longs, il ne peut attendre d'avoir une commande de taximètres pour lancer la fabrication des mémoires correspondantes et il doit donc détenir un stock de mémoires mortes programmées d'où des frais importants.De plus, si un règlement local vient à changer de façon telle qu'il entraîne une modification nécessaire du programme correspondant, le stock de mémoires déjà programmées devient inutilisable et il faut commander de nouvelles mémoires mortes.

La présente invention procure un procédé pour pallier ces difficultés.

Selon ce procédé, un fabricant de taximètres fabrique en série des taximètres identiques comportant une mémoire morte 9 contenant une bibliothèque de sous-programmes, par exemple un sous programme de calcul du prix de la course, un sous-programme de calcul des suppléments, un sous-programme de changement automatique de tarif, un sous-programme d'affichage, un sous-programme de gestion des boutons-poussoirs situés sur la face avant du taximètre, un sous-programme de mesure du coefficient caractéristique du véhicule,etc..

Certains de ces sous-programmes sont communs à tous les usages locaux tandis que d'autres sont spécifiques de certains lieux d'utilisation.

De plus, la mémoire morte 9 contient le début ou première partie du programme, c'est-à-dire la suite d'instructions que le micro-processeur doit exécuter à chaque initialisation. En particulier, ce début de programme comporte un programme chargeur, c'est-à-dire un programme qui gère automatiquement les opérations de dialogue entre le microprocesseur 3 et l'unité externe 13 connectée temporairement sur la prise 19 pour transcrire dans la mémoire électriquement effaçable et reprogrammable 10 la deuxième partie du programme ainsi que les données de tarification qui sont enregistrées dans la mémoire 15 de l'unité externe, laquelle deuxième partie du programme appelle certains des sous-programmes inscrits dans la mémoire morte 9 qui correspondent aux conditions locales d'utilisation.

Dans le cas où les conditions locales nécessitent des opérations qui ne se trouvent pas dans la bibliothèque de sous-programmes inscrite dans la mémoire morte 9, on peut également transférer dans la mémoire vive ces nouveaux sous-programmes.

Le fabricant de taximètres fabrique en série des taximètres identiques comportant tous une mémoire morte 9 contenant la même bibliothèque de sous-programmes de base et la même première partie de programme.

Lorsqu'il doit livrer des appareils dans un pays ou dans une ville déterminée, il introduit dans la mémoire 15 d'un mini-ordinateur 13 la deuxième partie du programme qui est adaptée aux conditions locales d'utilisation. Après quoi il branche les taximètres un par un sur le mini-ordinateur 13 et il transfère dans la mémoire 10 de chaque taximètre cette deuxième partie de programme.

Si les conditions locales d'utilisation viennent à changer après que les taximètres ont été mis en service, le constructeur ou l'utilisateur des taximètres peut établir une nouvelle deuxième partie de programme corresp ondant aux nouvelles conditions locales, l'enregistrer dans la mémoire vive 15 d'un mini-ordinateur externe 13 puis rebrancher tous les taximètres, un par un, sur ce mini-ordinateur pour reprogrammer la mémoire 10, c'est-à-dire pour effacer la deuxième partie de programme antérieure et pour inscrire dans celle-ci la nouvelle deuxième partie de programme.

Si les nouvelles conditions locales imposent l'utilisation de sous-programmes qui n'ont pas été prévus dans la bibliothèque de sous-programmes, il est possible d'enregistrer ces sous-programmes dans la mémoire vive 10, de sorte que l'on peut ainsi obtenir des taximètres évolutifs adaptables à de nouvelles. cnditions de fonctionnement non prévues lors de la construction, par exemple des taximètres adaptables à un paiement de cartes de crédit qui n'aurait pas été prévu sur les premiers modèles mis en service.

La figure 2 représente un autre mode de réalisation d'un taximètre selon l'invention.

Les parties homologues sont représentées par les mêmes repères sur les figures 1 et 2.

On a représenté sur la figure 2 un taximètre comportant une mémoire 17 qui est dans ce cas une mémoire de type EEPROM, qui ne nécessite pas une alimentation électrique de secours et qui pourrait aussi être une mémoire de type RAM avec son alimentation de secours.

Le repère 18 représente une mémoire morte programmable de type PROM ou EPROM qui contient une première partie du programme incluant un programme chargeur (en anglais bootstrap).

Avantageusement, le boîtier 1 du taximètre comporte un connecteur électrique 20 et la mémoire morte 18 est branchée sur celui-ci, de sorte qu'elle peut être retirée une fois que le taximètre a été programmé.

On a expliqué que la conception et la fabrication de masques nécessaires pour fabriquer des mémoires mortes de type ROM ou des plaquettes de circuits intégrés contenant un microprocesseur avec ROM incorporée nécessite des délais de l'ordre de trois à six mois.

La solution selon la figure 2 permet au constructeur de livrer des taximètres pendant ce délai.

La programmation des mémoires PROM pour inscrire dans celles-ci un programme chargeur est une opération qui prend peu de temps. Cette opération, de même que l'inscription d'un programme dans la mémoire vive d'un mini-ordinateur peuvent être réalisées par le fabricant de taximètres.

La figure 2 illustre un procédé selon lequel le fabricant de taximètres électroniques qui ne dispose pas de mémoires ROM programmées enregistre d'abord dans des mémoires mortes programmables PROM un programme chargeur. Il connecte une mémoire PROM 18 sur chaque taximètre à programmer. Il enregistre dans la mémoire vive 15 d'un ordinateur externe 13 un programme de fonctionnement du taximètre et des données par exemple des prix unitaires. Il connecte ensuite chaque taximètre sur l'unité externe 13 grâce à la prise entrées-sorties 19, dont les taximètres sont pourvus. Il appuie ensuite sur une touche du clavier 16 et le microprocesseur 3 du taximètre effectue automatiquement sous la commande du programme chargeur contenu dans la mémoire 18, le transfert dans la mémoire 17 du programme et des données contenues dans la mémoire 15.

Les taximètres selon les figures 1 et 2 ont en commun le fait qu'ils comportent une mémoire électriquement effaçable et reprogrammable 10 ou 17, qui contient une partie du programme de fonctionnement du taximètre et qui peut être reprogrammée électriquement.

Ils comportent également une prise entrée-sortie 19 qui permet de les connecter temporairement sur un ordinateur externe, notamment sur un mini-ordinateur transportable.

Ils comportent enfin une première partie de programme dont un programme-chargeur qui est inscrit dans une mémoire morte et qui permet au taximètre de charger lui-même automatiquement son programme complet de fonctionnement en dialoguant avec une unité externe 13 qui contient la deuxiè me partie du programme adaptée aux conditions locales de fonctionnement.

Avantageusement, dans le mode de réalisation selon la figure 2, la deuxième partie de programme inscrite dans la mémoire 17 contient un sous-programme chargeur. Ainsi, la mémoire PROM 18 peut être branchée provisoirement sur le bus 12 du taximètre et être enlevée après que le programme chargeur a été inscrit dans la mémoire 17.

**Revendications**

1. Procédé pour inscrire un programme de fonctionnement dans un taximètre électronique qui comporte une unité centrale ou microprocesseur (3), au moins une mémoire morte (9, 18), au moins une mémoire de type électriquement effaçable et reprogrammable (10), et qui comporte des moyens (19) pour connecter ledit taximètre sur une unité de calcul externe (13), caractérisé en ce qu'il comporte les opérations suivantes :

   a) - on enregistre dans ladite mémoire morte une première partie dudit programme de fonctionnement, laquelle première partie contient un programme chargeur,

   b) - on enregistre dans ladite unité de calcul externe une deuxième partie dudit programme de fonctionnement, laquelle deuxième partie est adaptée à des spécifications locales de fonctionnement des taximètres,

   c) - on connecte temporairement ledit taximètre à ladite unité de calcul externe grâce auxdits moyens de connexion et on introduit électriquement ladite deuxième partie dudit programme de fonctionnement dans ladite mémoire électriquement effaçable et reprogrammable (10), sous contrôle dudit programme chargeur.

2. Procédé selon la revendication 1, caractérisé en ce que ladite première partie dudit programme de fonctionnement contient, en outre, une bibliothèque de sous-programmes, qui comporte des sousprogrammes communs à toutes lesdites spécifications locales de fonctionnement et qui comporte des sous-programmes spécifiques à certaines spécifications locales de fonctionnement, et en ce que ladite deuxième partie dudit programme de fonctionnement peut appeler des sous-programmes de ladite bibliothèque.

3. Taximètre électronique comportant un microprocesseur (3), au moins une mémoire morte (9, 18), au moins une mémoire de type électriquement effaçable et reprogrammable (10), des moyens (19) pour connecter ledit taximètre sur une unité de calcul externe (13), caractérisé en ce que ladite mémoire morte contient un programme chargeur qui commande automatiquement les opérations de transfert dans ladite mémoire électriquement effaçable et reprogrammable (10) d'une partie au moins d'un programme de fonctionnement dudit taximètre depuis ladite unité de calcul externe, lorsque celle-ci est connectée audit taximètre par lesdits moyens (19).

4. Taximètre selon la revendication 3, caractérisé en ce que ladite mémoire morte contient en outre une bibliothèque de sousprogrammes.

5. Taximètre selon l'une quelconque des revendications 3 à 4, caractérisé en ce que ladite mémoire morte est programmable.

6. Taximètre selon l'une quelconque des revendications 3 à 4, caractérisé en ce que ladite mémoire morte est masquée et de préférence, ladite mémoire morte est incorporée dans un circuit intégré qui comporte ledit microprocesseur.

## Claims

1. Method for recording a program in an electronic taximeter comprising a central calculating and storing unit or microprocessor (3), at least a read-only memory (9, 18), at least a memory of electrically erasable and reprogrammable type (10) which comprises means (19) for connecting said taximeter to an external calculating unit (13), characterized in that it comprises the following steps:
    a) recording in said read-only memory a first part of said operating program, said first part containing an initialization program,
    b) recording in said external calculating unit a second part of said operating program, said second part being adapted to taximeter local operating requirements.
    c) temporarily connecting said taximeter to said external calculating unit by means of said connection means and electrically introducing said second part of said operating program in said electrically erasable and reprogrammable memory (10), under the control of said initialization program.

2. Method according to claim 1, characterized in that said first part of said operating program further contains a subroutine library which includes subroutines common to all said local operating requirements and which includes subroutines specific to certain local operating requirements, and in that said second part of said operating program can call subroutines from said library.

3. Electronic taximeter comprising a microprocessor (3), at least a read-only memory of the electrically erasable and reprogrammable type (10), means (19) for connecting said taximeter to an external calculating unit (13), characterized in that said read-only memory includes an initialization program which controls automatically the operations of transfer into said electrically erasable and reprogrammable memory (10) of at least part of an operating program of said taximeter from said external calculating unit, when the latter is connected to said taximeter via said means (19).

4. Taximeter according to claim 3, characterized in that said read-only memory further contains a subroutine library.

5. Taximeter according to any one of claims 3 to 4, characterized in that said read-only memory is programmable.

6. Taximeter according to any one of claims 3 to 4, characterized in that said read-only memory is incorporated in an integrated circuit comprising said microprocessor.

## Patentansprüche

1. Verfahren zum Eingeben eines Funktionsprogramms in ein elektronisches Taxameter mit einer zentralen Einheit oder Mikroprozessor (3), mindestens einem Festspeicher (9, 18), mindestens einem elektrisch löschbaren und wiederprogrammierbaren Speicher (10) und mit Einrichtungen (19) zum Anschließen des Taxameters an eine externe Recheneinheit (13), dadurch gekennzeichnet, daß es die folgenden Schritte umfaßt:
    a) Speicherung eines ersten Teils des Funktionsprogramms in den Festspeicher, welcher erste Teil ein Ladeprogramm enthält,
    b) Speicherung eines zweiten Teils des Funktionsprogramms in die externe Recheneinheit, welcher zweite Teil für örtliche Funktionsspezifikationen von Taxametern ausgelegt ist,
    c) vorübergehende Anschaltung des Taxameters an die externe Recheneinheit mittels der Anschließeinrichtungen und elektrisches Eingeben des zweiten Teils des Funktionsprogramms in den elektrisch löschbaren und wiederprogrammierbaren Speicher (10) unter Kontrolle des Ladeprogramms.

2. Verfahren nach Anspruch 1, dadurch gekennzeichnet, daß der erste Teil des Funktionsprogramms weiters eine Unterprogrammbibliothek enthält, die sämtlichen örtlichen Funktionsspezifikationen gemeinsame Unterprogramme umfaßt und die für bestimmte örtliche Funktionsspezifikationen spezifische Unterprogramme umfaßt, und daß der zweite Teil des Funktionsprogramms Unterprogramme der Bibliothek abrufen kann.

3. Elektronisches Taxameter, umfassend einen Mikroprozessor (3), mindestens einen Festspeicher (9, 18), mindestens einen elektrisch löschbaren und wiederprogrammierbaren Speicher (10), Einrichtungen (19) zum Anschließen des Taxameters an eine externe Recheneinheit (13), dadurch gekennzeichnet, daß der Festspeicher ein Ladeprogramm enthält, das automatisch die Übertragungsoperationen zumindest eines Teils eines Funktionsprogramms des Taxameters von der externen Recheneinheit in den elektrisch löschbaren und wiederprogrammierbaren Speicher (10) steuert, wenn die Recheneinheit mittels der genannten Einrichtungen (19) an das Taxameter angeschlossen ist.

4. Taxameter nach Anspruch 3, dadurch gekennzeichnet, daß der Festspeicher weiters eine Unterprogrammbibliothek umfaßt.

5. Taxameter nach einem der Ansprüche 3 bis 4, dadurch gekennzeichnet, daß der Festspeicher programmierbar ist.

6. Taxameter nach einem der Ansprüche 3 bis 4, dadurch gekennzeichnet, daß der Festspeicher verdeckt ist und vorzugsweise in eine integrierte Schaltung, die den Mikroprozessor umfaßt, inkorporiert ist.

Fig_1

Fig_2